# EUROPEAN PATENT SPECIFICATION

(11) **EP 4 191 470 B1**
(45) Date of publication and mention of the grant of the patent: **02.12.2026**
(21) Application number: 21848566.2
(22) Date of filing: 30.07.2021
(51) Int. Cl.: H04L 41/0631, G06F 17/16, G06F 18/20, G06F 18/2113, G06N 20/00, G06F 17/18, G06N 7/01, H04L 12/18, H04L 41/14, H04L 41/16

(54) **FEATURE SELECTION METHOD AND DEVICE, NETWORK DEVICE AND COMPUTER-READABLE STORAGE MEDIUM**
VERFAHREN UND VORRICHTUNG ZUR AUSWAHL VON MERKMALEN, NETZWERKVORRICHTUNG UND COMPUTERLESBARES SPEICHERMEDIUM
PROCÉDÉ ET DISPOSITIF DE SÉLECTION DE CARACTÉRISTIQUES, DISPOSITIF DE RÉSEAU, ET SUPPORT DE STOCKAGE LISIBLE PAR ORDINATEUR

(30) Priority: 31.07.2020 CN 202010760727
(43) Date of publication of application: 07.06.2023
(73) Proprietor: ZTE Corporation, Shenzhen, Guangdong 518057 (CN)
(72) Inventor: DONG, Xinyou, Shenzhen Guangdong 518057 (CN); HAN, Jing, Shenzhen Guangdong 518057 (CN)
(74) Representative: Canzler & Bergmeier Patentanwälte Partnerschaft mbB
(86) International application number: PCT/CN2021/109587
(87) International publication number: WO 2022/022683

(56) References cited:
- CN-A- 105 183 813
- CN-A- 106 991 447
- CN-A- 109 190 660
- CN-A- 110 766 042
- US-A1- 2010 259 442
- US-A1- 2014 207 764
- ZHAO ZHENYU ET AL: "Maximum Relevance and Minimum Redundancy Feature Selection Methods for a Marketing Machine Learning Platform", 2019 IEEE INTERNATIONAL CONFERENCE ON DATA SCIENCE AND ADVANCED ANALYTICS (DSAA), IEEE, 5 October 2019 (2019-10-05), pages 442 - 452, XP033694356, DOI: 10.1109/DSAA.2019.00059
- GONZALEZ-LOPEZ JORGE ET AL: "Distributed multi-label feature selection using individual mutual information measures", KNOWLEDGE-BASED SYSTEMS, ELSEVIER, AMSTERDAM, NL, vol. 188, 20 September 2019 (2019-09-20), XP085995261, ISSN: 0950-7051, [retrieved on 20190920], DOI: 10.1016/J.KNOSYS.2019.105052

## Description

### TECHNICAL FIELD

The present disclosure relates to the field of information and communication technology.

### BACKGROUND

With the development of wireless communication technology, a large amount of high-dimensional data information appears in wireless communication networks, and feature data extracted from the high-dimensional data information through supervised anomaly detection contains not only a large number of features related to classification but also a large amount of irrelevant feature information, redundant feature information, feature information with multi-feature collinearity, and noise data information. Such useless feature information may cause overfitting of data models or weaken a characterization capability, with the result that the feature information of data sets cannot be accurately characterized. U.S. patent application publication No. 2014/207764 A1 provides various embodiments selecting features from a feature space. In one embodiment a set of features and a class value are received. A redundancy score is obtained for a feature that was previously selected from the set of features. A redundancy score is determined, for each of a plurality of unselected features in the set of features, based on the redundancy score that has been obtained, and a redundancy between the unselected feature and the feature that was previously selected. A relevance to the class value is determined for each of the unselected features. A feature from the plurality of unselected features with a highest relevance to the class value and a lowest redundancy score is selected.

### SUMMARY

An embodiment of the present disclosure provides a feature selection method, including: according to correlation between performance features of a communication network and a preset category label, selecting a specified number of the features most relevant to the category label from the performance features of the communication network to obtain a designated feature set; and, in response to a case where a designated feature in the designated feature set satisfies a feature selection condition, determining the designated feature as the feature most relevant to the category label; wherein the feature selection condition includes: a feature selection parameter when maximum likelihood estimation of classification of the performance features reaches a maximum value is the same as a feature selection parameter when the correlation reaches a minimum value.

An embodiment of the present disclosure provides a feature selection device, including: a feature designation module configured to select, according to correlation between performance features of a communication network and a preset category label, a specified number of the features most relevant to the category label from the performance features of the communication network to obtain a designated feature set; a feature determination module configured to determine whether a designated feature in the designated feature set satisfies a feature selection condition, which includes: a feature selection parameter when maximum likelihood estimation of classification of the performance features reaches a maximum value is the same as a feature selection parameter when the correlation reaches a minimum value; and a feature selection module configured to determine the designated feature as the feature most relevant to the category label in response to a case where the feature determination module determines that the designated feature satisfies the feature selection condition.

An embodiment of the present disclosure provides a network device, including: one or more processors; and a memory having stored thereon one or more programs which, when executed by the one or more processors, cause the one or more processors to perform at least one operation of the feature selection method provided by the embodiment of the present disclosure.

An embodiment of the present disclosure provides a computer-readable storage medium having a computer program stored thereon, wherein, when the computer program is executed by a processor, at least one operation of the feature selection method provided by the embodiment of the present disclosure is performed.

### BRIEF DESCRIPTION OF DRAWINGS

FIG. 1 is a flowchart illustrating a feature selection method according to an embodiment of the present disclosure.
FIG. 2 is another flowchart illustrating a feature selection method according to an embodiment of the present disclosure.
FIG. 3 is a flowchart of calculation of feature correlation according to an embodiment of the present disclosure.
FIG. 4 is a flowchart of calculation of feature redundancy according to an embodiment of the present disclosure.
FIG. 5 is a flowchart of calculation of an iteration histogram according to an embodiment of the present disclosure.
FIG. 6 is a flowchart of calculation of conditional mutual information between features according to an embodiment of the present disclosure.
FIG. 7 is a schematic structural diagram of a feature selection device according to an embodiment of the present disclosure.
FIG. 8 illustrates an exemplary hardware architecture of a computing device capable of implementing the method and device provided by the embodiments of the present disclosure.

### DETAIL DESCRIPTION OF EMBODIMENTS

In order to make the objectives, technical solutions, and advantages of the present disclosure clearer, the embodiments of the present disclosure will be described in detail below with reference to the accompanying drawings. It should be noted that the embodiments of the present disclosure and the features therein can be arbitrarily combined with each other if no conflict is incurred.

Besides providing a large amount of useful knowledge for the supervised anomaly detection, the high-dimensional data information in the wireless communication networks also causes a series of unprecedented difficulties and challenges. At present, feature data extracted by the supervised anomaly detection contains not only a large number of features related to classification, but also a large number of irrelevant feature information, redundant feature information, feature information with multi-feature collinearity, and noise data information. Such useless feature information may cause the overfitting of the data models or weaken the characterization capability, with the result that the feature information of the data sets cannot be accurately characterized. Therefore, feature selection aims to find "intrinsic features" having a good classification characterization capability in high-dimensional data sets without weakening data information of data samples.

As a method capable of reducing data scales of the data sets and improving data quality, the feature selection is widely applied in the fields of machine learning and data mining. Feature selection algorithms may belong to, for example, the following three types: filter, wrapper, and embedded. Different feature selection processes are evaluated by different criteria such as consistency, distance, dependency, classification error rate, and information volume. For example, the feature selection algorithms may include: a Relief algorithm taking feature weights as a theoretical basis, and a Max-Relevance and Min-Redundancy (MRMR) algorithm taking maximum relevance and minimum redundancy as a theoretical basis.

An information volume method is widely applied due to its characteristics of stability and accuracy. However, the algorithms related to the information volume method have some defects. For example, a Best Individual Feature (BIF) algorithm is simple and fast, and is especially suitable for the high-dimensional data, but the BIF algorithm does not take correlations between selected features into account, causing greater redundancy; the MRMR algorithm just considers correlation between a single feature attribute and a category attribute and redundancy between the single feature attribute and the selected features in a feature selection process, but ignores the fact that a similar interaction relationship also exists between multiple-feature sets; and a Conditional Mutual Information Maximization (CMIM) algorithm evaluates importance of features with conditional mutual information. The larger the conditional mutual information value is, the more the new information provided by the features is, but a cost for calculation of the conditional mutual information is relatively high, and multidimensionality of samples causes inaccurate estimation of the conditional mutual information values.

The development of the wireless communication networks leads to an explosive increase in information volume, and data scaling is a tricky problem. For machine learning algorithms, since the processes such as data preprocessing, feature selection, and vectorization need a large amount of calculation, take long calculation time, and consume large memories, classification performance of the algorithms is reduced.

**In** some feature selection methods based on a distributed computing framework Spark in parallel with a binary moth-flame algorithm, the moth-flame optimization algorithm can be introduced to perform the feature selection by making use of a good classification capability of the moth-flame optimization algorithm in the aspect of reduction of feature redundancy. With the aid of a Spark distributed platform which is based on a memory and has the characteristic of parallel computing, the moth-flame optimization algorithm and the distributed parallel computing are combined together, so as to prevent the algorithm from falling into local optimization, improve classification performance of the algorithm, and minimize the number of features while maximizing the classification performance.

However, although the moth-flame optimization algorithm has the good classification capability in the aspect of reduction of feature redundancy, moth-flame optimization algorithm does not consider correlations between features; moreover, the classification performance and a dimensionality reduction capability of the moth-flame algorithm are severely limited due to the characteristics of the moth-flame algorithm that the algorithm is prone to fall into the local optimization and has a poor searching capability. Although the use of the distributed computing framework Spark can improve the problems of the local optimization and the poor searching capability to some extent, the above two problems of the cost and the performance cannot be essentially solved.

In some feature selection and classification methods based on maximal information coefficient, the feature selection can be performed using the idea of the conditional mutual information. However, the calculation of the conditional mutual information is high in cost, and consumes a large number of calculation resources in a feature selection process under the condition that there are a large number of features and the features have multiple dimensions.

In some feature filtering methods improving the correlation-based feature selection, the problems of poor data quality and low preprocessing efficiency in software defect prediction can be solved, and performance of a software defect prediction model can be improved while deleting redundant features and irrelevant features. However, the feature filtering methods are also faced with the problem of high calculation cost in the feature selection process, and consumes a large number of calculation resources under the condition that there are a large number of features and the features have multiple dimensions.

An embodiment of the present disclosure provides a feature selection method, which can reduce a cost of a feature selection process and improve performance of machine learning algorithms and performance of feature selection algorithms.

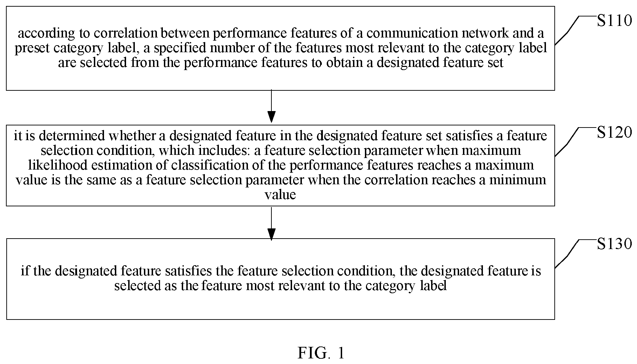

FIG. 1 is a flowchart illustrating a feature selection method according to an embodiment of the present disclosure. As shown in FIG. 1, the feature selection method may include the following operations S110, S120, and S130.

In operation S110, according to correlation between performance features of a communication network and a preset category label, a specified number of the features most relevant to the category label are selected from the performance features to obtain a designated feature set.

In operation S120, it is determined whether a designated feature in the designated feature set satisfies a feature selection condition. The feature selection condition includes: a feature selection parameter when maximum likelihood estimation of classification of the performance features reaches a maximum value is the same as a feature selection parameter when the correlation reaches a minimum value.

In operation S130, if the designated feature satisfies the feature selection condition, the designated feature is selected as the feature most relevant to the category label.

According to the feature selection method provided by the embodiment of the present disclosure, by applying a maximum likelihood estimation rule to the field of information theory-based feature selection in the process of performing feature selection on the performance features of the communication network, the information-theoretic feature selection method based on the maximum likelihood estimation rule effectively connects the maximum likelihood estimation to an information-theoretic feature selection algorithm, and reduces a calculation cost of directly using an information theory-related method to select the performance features of the communication network.

A process of obtaining the feature selection condition will be described below. A method for obtaining the feature selection condition may include the following operations S01 and S02.

In operation S01, data is preprocessed. In this operation, relevant features faced with missing data may be deleted, and feature data may be normalized.

In operation S02, an information-theoretic feature selection rule is introduced.

For N feature sample values, a relation pair of each sample value and a category may be represented as (x, y), where x denotes a feature vector and satisfies x = [x₁, x₂, ... ... , x_{d}] ; and y denotes the category. N sample observations may be represented as feature vector X = {X₁, X₂, ... ... , X_{d}} and Y.

In an alternative implementation, a binary feature vector θ is used to represent whether a feature is designated, for example, 1 represents that the feature is designated, and 0 represents that the feature is not designated. For example, x*_{θ}* denotes the designated feature; and x*_{θ̂}* denotes the undesignated feature. Thus, data features may be represented as x = {x_{θ}*,* x_{θ̂}}_{∘}

According to the feature selection method provided by the embodiment of the present disclosure, for the performance features of the communication network, a subset θ* of a feature set exists, and p(y|x) = p (y|x_{θ*}) . A feature prediction model q may be regarded as an approximation of a true mapping model p. The model q has two layers of parameters: one layer is the designated feature θ and the other layer is a parameter τ configured to predict the category of a feature.

Therefore, a minimum feature set needs to be found to make the prediction model q be infinitely close to the true model. In an alternative implementation, maximum likelihood estimation of the parameters in the prediction model q may be represented by the following expression (1). $L \left(θ, \left.τ\right|D\right) = {\prod }_{i = 1}^{n} q \left(\left.{y}^{i}\right|{x}_{θ}^{i},τ\right)$ (1)

In the expression (1), the maximum likelihood estimation of the parameters in the prediction model q is represented as follows: according to the feature parameter θ and the category prediction parameter τ, the minimum feature set D is such solved that the designated features in D allow a probability density function of the sample category y on the condition of the a designated feature ${x}_{θ}^{i}$ and the parameter τ to approximate to a probability density of the sample category y on the condition of a true value as much as possible, where the feature ${x}_{θ}^{i}$ and the parameter τ are the parameters which need to be estimated.

In an alternative implementation, the following expression (2) may be obtained by normalizing the expression (1) and taking a logarithm. $l = \frac{1}{N} {\sum }_{i = 1}^{N} logq \left(\left.{y}^{i}\right|{x}_{θ}^{i},τ\right)$ (2)

A logarithm taking operation may convert multiplication calculation into addition calculation, reduce an absolute value of the data, and facilitate the calculation; moreover, after the logarithm taking operation is performed, natures and correlation of data are not changed, but a scale of a variable is reduced and the data is more stable.

The expression (2) may be converted to the following expression (3) through an addition p (y|x_{θ}). $l = \frac{1}{N} {\sum }_{i = 1}^{N} log \frac{q \left(\left.{y}^{i}\right|{x}_{θ}^{i},τ\right)}{p \left(\left.{y}^{i}\right|{x}_{θ}^{i}\right)} + \frac{1}{N} {\sum }_{i = 1}^{N} logp \left(\left.{y}^{i}\right|{x}_{θ}^{i},τ\right)$ (3)

In the expression (3), the addition p (y|x_{θ}) represents true distribution of the label y after the designated feature x_{θ}, and the following expression (4) may be obtained by adding an addition p(y|x) on the basis of the expression (3). $l = \frac{1}{N} {\sum }_{i = 1}^{N} log \frac{q \left(\left.{y}^{i}\right|{x}_{θ}^{i},τ\right)}{p \left(\left.{y}^{i}\right|{x}_{θ}^{i}\right)} + \frac{1}{N} {\sum }_{i = 1}^{N} log \frac{p \left(\left.{y}^{i}\right|{x}_{θ}^{i}\right)}{p \left(\left.{y}^{i}\right|{x}^{i}\right)} - \frac{1}{N} {\sum }_{i = 1}^{N} logp \left(\left.{y}^{i}\right|{x}^{i}\right)$ (4)

In the expression (4), p(y|x) is true distribution of all the features. Mathematical expectation is denoted as E_{xy}{·}, then both sides of the equal sign in the expression (4) are subjected to the logarithm taking operation, and are then subjected to a negative taking operation to convert a maximum value to a minimum value, so as to obtain the following expression (5). $- l = {E}_{xy} \left\{log\frac{p \left(\left.y\right|{x}_{θ}\right)}{q \left(\left.y\right|{x}_{θ},τ\right)}\right\} + {E}_{xy} \left\{log\frac{p \left(\left.y\right|x\right)}{q \left(\left.y\right|{x}_{θ}\right)}\right\} - {E}_{xy} \left\{logp\left(\left.y\right|x\right)\right\}$ (5)

After mutual information and information entropy are introduced in the expression (5), the expression (5) may be converted to the following expression (6). ${lim}_{N \to ∞} - l = {E}_{xy} \left\{log\frac{p \left(\left.y\right|{x}_{θ}\right)}{q \left(\left.y\right|{x}_{θ},τ\right)}\right\} + I \left({X}_{\hat{θ}};\left.Y\right|{X}_{θ}\right) + H \left(\left.Y\right|X\right)$ (6)

In the expression (6), the first term ${E}_{xy} \left\{log\frac{p \left(\left.y\right|{x}_{θ}\right)}{q \left(\left.y\right|{x}_{θ},τ\right)}\right\}$ is a likelihood ratio of true distribution to intrinsic feature distribution, and is independent of the specific feature parameter θ and the specific prediction parameter τ; and the third term H(Y|X) is conditional information entropy, and is related to all the features. Therefore, the maximum likelihood estimation information-theoretic feature selection algorithm is closely related to the second term (X_{θ̂}; Y|X_{θ}) conditional mutual information.

As can be seen from the expression (6), the maximum likelihood estimation reaches the maximum value when the second term of the expression (6) is minimum, that is, as shown in the following expression (7). ${arg}_{θ} max l = {arg}_{θ} minl \left({X}_{\hat{θ}};\left.y\right|{X}_{θ}\right)$ (7)

As can be seen from the above description, when the conditional mutual information I(X_{θ̂}; ylX_{θ}) in the expression (7) reaches a minimum value, a best feature set may be obtained according to a value of θ.

In the above implementation, it is determined whether the designated feature in the designated feature set satisfies the feature selection condition, i.e., the above expression (7), and if the designated feature satisfies the feature selection condition, the designated feature is selected as the feature most relevant to the category label.

In an alternative implementation, the value of the maximum likelihood estimation of the classification of the performance features is a sum of a likelihood ratio of true feature distribution to intrinsic feature distribution of the category label in the performance features, the correlation between the performance features and the category label, and information entropy of the performance features and the category label. The likelihood ratio represents: a ratio of a probability density of the category label under the condition of the designated feature to a probability density of the category label under the condition of the designated feature and the feature prediction parameter.

In an alternative implementation, before the operation S110, the feature selection method may further include: operation S10, according to the performance features of performance data of the communication network, storing the performance features as a feature matrix; operation S11, transposing the feature matrix to obtain the transposed feature matrix; and operation S12, calculating correlation between each performance feature of the communication network and the preset category label according to the performance features in the transposed feature matrix.

In this implementation, the performance features of the performance data of the communication network are represented as the feature matrix, and the feature data is transposed. With the feature matrix transposed, calculation performance can be greatly improved.

In an alternative implementation, each matrix element in the feature matrix of the performance features represents the feature data corresponding to a specified feature index value and a partition index value. The feature index value is configured to index specified features of the communication network, the partition index value is configured to index data storage partitions corresponding to the category label, and the feature data of the same specified feature is stored in the same partition in the feature matrix.

In this implementation, in the feature matrix of the performance features, the column "row" represents the features, the column "col" represents objects, and a triple (k, part.index, matrix (k)) is configured to represent the matrix, where k denotes a feature index, part.index denotes a partition index, and matrix (k) denotes the feature data. Thus, the data of the same feature of all the objects is allocated to a particular partition, for example, the data of the same feature of all the objects is allocated to one partition, thereby reducing the calculation cost.

In an alternative implementation, if the designated feature does not satisfy the feature selection condition, the feature selection method may further include: operation S140, calculating feature redundancy among the designated features in the designated feature set, the performance features, and the category label; operation S141, updating the designated feature set using the information about the feature redundancy obtained by the calculation; and operation S142, taking the updated designated feature set as the most relevant feature data selected from the performance features.

In this implementation, the feature redundancy among the designated features in the designated feature set, the performance features, and the category label is calculated until the sufficient designated feature set is obtained.

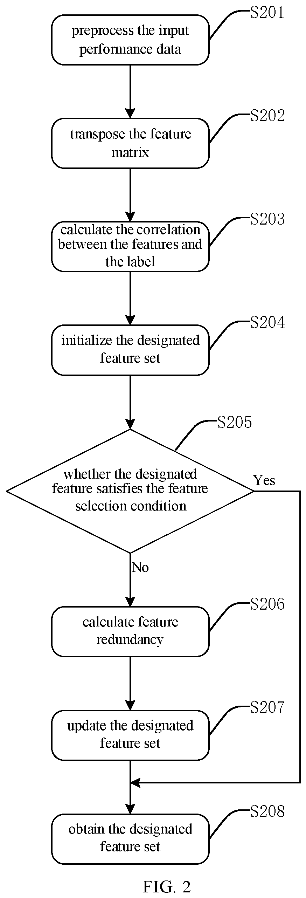

For a better understanding of the present disclosure, FIG. 2 provides another flowchart illustrating the feature selection method according to the embodiment of the present disclosure. As shown in FIG. 2, the feature selection method may include the following operations S201 to S208.

In operation S201, the input data of the performance features of the communication network is subjected to data preprocessing.

In operation S202, the feature matrix of the preprocessed data of the performance features is transposed to obtain the transposed feature matrix.

In this operation, the feature matrix may keep original partitions of the data, so as to suppress data scattering; and after the feature matrix is transposed, the result data is pooled, so that the data may be reused, thereby reducing the calculation cost.

In operation S203, the correlation between the performance features and the label is calculated.

In operation S204, the designated feature set is initialized according to the results of the correlation of the features.

In this operation, the results of the correlation of the features include: a predetermined number of most relevant features P_best, which are added to the designated feature set according to the results of the correlation of the features, initial levels of the features are created, and an iterative process of the following operations S205 to S207 is carried out.

In operation S205, it is determined whether the designated most relevant features P_best satisfy the preset feature selection condition, and if the designated most relevant features P_best satisfy the preset feature selection condition, the operation S208 is performed; and if the designated most relevant features P_best do not satisfy the preset feature selection condition, the operation S206 is performed.

In this operation, it is determined whether the designated features in the designated feature set satisfy the feature selection condition, i.e., the expression (7), and if the designated features satisfy the feature selection condition, the designated features are selected as the features most relevant to the category label. That is, an intermediate result pool of the designated feature set may be updated according to whether the designated most relevant features P_best satisfy the preset feature selection condition.

In each iterative process, a termination condition of the iteration is that an element set in the designated feature set and an undesignated element set satisfy the expression (7) or there is no feature left. That is, it is determined whether the number of the features in the designated feature set satisfies the expression (7), and if the number of the features in the designated feature set satisfies the expression (7), the operation S208 is performed; and if the number of the features in the designated feature set does not satisfy the expression (7), the operation S206 is performed.

In operation S206, the redundancy among the features is calculated.

In operation S207, the designated feature set is updated according to the result of the calculation of the redundancy among the features.

In operation S208, the designated feature set is obtained.

Through the operations S201 to S208, the maximum likelihood estimation rule can be introduced and applied to the field of the information theory-based feature selection, so that a selection rule with a theoretical basis is provided for the information-theoretic feature selection algorithm.

In an alternative implementation, the operation S12 may include operations S21, S22, and S23.

In operation S21, the category label is broadcast to a plurality of preset distributed computing nodes. In operation S22, each distributed computing node is instructed to calculate mutual information between a candidate feature and the category label and obtain feature correlation between the candidate feature and the category label, with the candidate feature being the performance feature pre-allocated to each distributed computing node. In operation S23, the correlation between each performance feature and the category label is determined according to the feature correlation calculated by each distributed computing node.

In this implementation, by adopting the distributed method to select the feature having higher correlation with the label from the large-scale feature data, a problem of high calculation complexity of the information theory-related algorithm can be effectively solved.

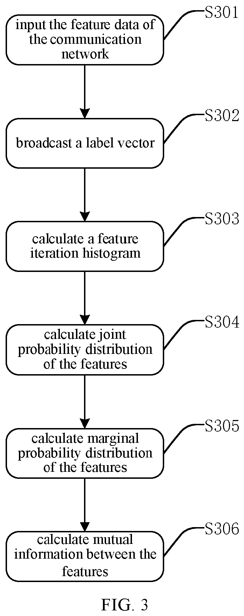

FIG. 3 is a flowchart of the calculation of the feature correlation according to an embodiment of the present disclosure. As shown in FIG. 3, in an alternative implementation, a calculation method of the feature correlation may include the following operations S301 to S306.

In operation S301, the feature data of the communication network is input. In this operation, the transposed matrix of the feature data is acquired and input. In the matrix of the feature data, each matrix element represents the feature data corresponding to a specified feature index value and a partition index value, the feature index value is configured to index the specified features of the communication network, the partition index value is configured to index the data storage partitions corresponding to the category label, and the feature data of the same specified feature is stored in the same partition in the matrix.

In operation S302, a label vector is broadcast. In this operation, all nodes in a Spark cluster can acquire the label vector through broadcasting the label vector. For example, the category labels of all the data storage partitions in the transposed matrix of the feature data are acquired to form one vector, and the vector is then broadcast.

In operation S303, a histogram of all the candidate features and the category labels are calculated. In this operation, the candidate features may be at least part of the performance features of the communication network that are pre-allocated to each distributed computing node.

In operation S304, joint probability distribution of the category labels and the candidate features is calculated through the histogram.

In operation S305, marginal probability distribution of the category labels and the candidate features is calculated through the histogram.

In operation S306, a feature mutual information value of each candidate feature is obtained.

Through the operations S301 to S306, the calculation process of the feature correlation in the large-scale data is optimized based on the distributed computing framework, so that the information theory-based feature selection algorithm can be applied in current scenarios, and the performance of the machine learning algorithms and the performance of the feature selection algorithms can be improved.

In an alternative implementation, the operation S22 may include the following operations S221 to S224.

In operation S221, histogram information of the category label and histogram information of the candidate feature are calculated.

In operation S222, marginal probability distribution of the category label, marginal probability distribution of the candidate feature, and joint probability distribution of the category label and the candidate feature are calculated according to the histogram information of the category label and the histogram information of the candidate feature.

In operation S223, a probability distribution product of the marginal probability distribution of the category label and the marginal probability distribution of the candidate feature is calculated, and a similarity degree of the joint probability distribution and the probability distribution product is calculated, so as to obtain the mutual information between the candidate feature and the category label.

In operation S224, the mutual information between the candidate feature and the category label is calculated.

In this implementation, by calculating the mutual information between the candidate feature and the category label based on the distributed computing framework, the calculation cost of the information theory-related algorithm can be greatly reduced.

In an alternative implementation, the operation S140 may include: operation S141, broadcasting the category label and the designated feature set to the plurality of preset distributed computing nodes; operation S142, instructing each distributed computing node to calculate the feature redundancy among the candidate features, the designated features in the designated feature set, and the category label, with the candidate features being the performance features pre-allocated to each distributed computing node; and operation S143, determining feature redundancy between each performance feature and the category label according to the feature redundancy calculated by each distributed computing node.

In this implementation, by adopting the distributed method to calculate the redundancy among the features in the large-scale feature data, the problem of the high calculation complexity of the information theory-related algorithm can be effectively solved.

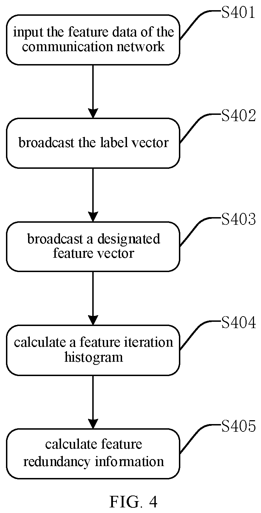

FIG. 4 is a flowchart of the calculation of the feature redundancy according to an embodiment of the present disclosure. As shown in FIG. 4, in an alternative implementation, a calculation method of the feature redundancy may include the following operations S401 to S405.

In operation S401, the feature data of the communication network is input. In this operation, the transposed feature data is acquired and input.

In operation S402, the label vector Y is broadcast to the Spark cluster.

In operation S403, a designated feature vector is broadcast to the Spark cluster. In this operation, for example, a designated best feature P_{best} is broadcast to the Spark cluster.

In operation S404, a feature iteration histogram of the candidate features, the designated best feature P_{best}, and the category label Y is calculated. In this operation, the candidate features may be at least part of the performance features of the communication network that are pre-allocated to each distributed computing node.

In operation S405, feature redundancy information of each candidate feature is calculated. In this operation, the feature redundancy among the features in the designated feature set, the candidate features, and the category label is calculated.

Through the operations S401 to S405, the calculation process of the feature redundancy in the large-scale data is optimized based on the distributed computing framework, so that the information theory-based feature selection algorithm can be applied in the current scenarios, and the performance of the machine learning algorithms and the performance of the feature selection algorithms can be improved.

In an alternative implementation, the operation S142 may include the following operations S142-01 and S142-02.

In operation S142-01, the histogram information of the candidate features, the histogram information of the designated features in the designated feature set, and the histogram information of the category label are calculated.

In operation S142-02, conditional mutual information among the candidate features, the designated features, and the category label is calculated according to the histogram information of the candidate features, the histogram information of the designated features, and the histogram information of the category label, so as to obtain the feature redundancy among the candidate features, the designated features, and the category label.

In this implementation, the conditional mutual information and the feature redundancy among the candidate features, the designated features, and the category label are calculated according to the histogram information, thereby improving calculation efficiency.

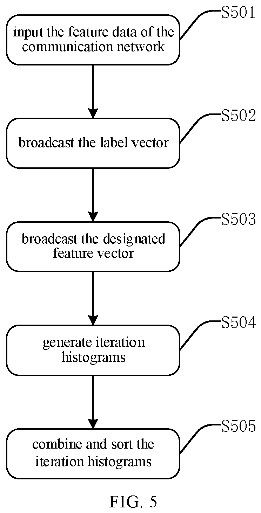

FIG. 5 is a flowchart of calculation of an iteration histogram according to an embodiment of the present disclosure. As shown in FIG. 5, in an alternative implementation, a calculation process of the iteration histogram may include the following operations S501 to S505.

In operation S501, the feature data of the communication network is input. In this operation, the transposed feature data may be input.

In operation S502, the label Y is broadcast to the Spark cluster.

In operation S503, the designated feature vector is broadcast to the Spark cluster. For example, the designated best feature P_{best} is broadcast to the Spark cluster.

In operation S504, a corresponding feature iteration histogram is generated on each computing node in the Spark cluster. In this operation, the feature iteration histogram of the candidate features, the designated best feature P_{best}, and the category label Y is calculated on each computing node.

In operation S505, the acquired feature iteration histograms are combined and sorted according to the feature iteration histogram acquired from and generated by each computing node.

Through the operations S501 to S505, the three-dimensional histogram of the features is calculated according to the candidate features, the designated best feature P_{best}, and the label Y.

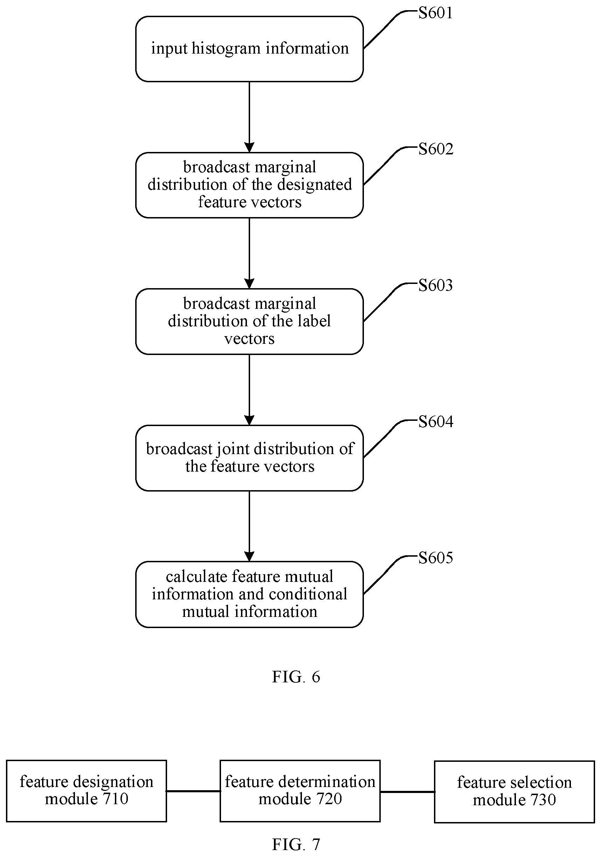

FIG. 6 is a flowchart of calculation of conditional mutual information between features according to an embodiment of the present disclosure. As shown in FIG. 6, in an alternative implementation, a calculation process of the conditional mutual information between the features may include the following operations S601 to S605.

In operation S601, histogram information is input. In this operation, the input histogram information includes: histogram information of candidate feature vectors, histogram information of designated feature vectors, and histogram information of category label vectors.

In operation S602, marginal distribution of the designated feature vectors is broadcast to all the computing nodes.

In operation S603, marginal distribution of the label vectors is broadcast to all the computing nodes.

In operation S604, joint distribution of the feature vectors is broadcast to all the computing nodes. In this operation, for example, joint probability distribution of the designated feature vectors is broadcast to all the computing nodes. A first element and a second element in each histogram tuple may be a feature index and a three-dimensional matrix, respectively.

In operation S605, a feature mutual information value and a conditional mutual information value are calculated. In this operation, the feature mutual information value and the conditional mutual information value are calculated according to the histogram information of the candidate feature vectors, the histogram information of the designated feature vectors, and the histogram information of the category label vectors.

Through the operations S601 to S605, by calculating the mutual information of the candidate features according to the histograms which are accurate graphical representations of distribution of numerical data, the distribution of the performance features can be described more clearly, which is beneficial to the calculation process of the mutual information between the features in the embodiments of the present disclosure.

According to the feature selection method provided by the embodiments of the present disclosure, the feature selection process of the large-scale data can be optimized based on the distributed computing framework, so that the information theory-based feature selection algorithm can be applied in the current scenarios, and the performance of the machine learning algorithms and the performance of the feature selection algorithms can be improved.

A feature selection device according to an embodiment of the present disclosure will be described in detail below with reference to the drawings. FIG. 7 is a schematic structural diagram of the feature selection device according to the embodiment of the present disclosure. As shown in FIG. 7, the feature selection device includes a feature designation module 710, a feature determination module 720, and a feature selection module 730.

The feature designation module 710 is configured to select, according to correlation between performance features of a communication network and a preset category label, a specified number of the features most relevant to the category label from the performance features to obtain a designated feature set.

The feature determination module 720 is configured to determine whether a designated feature in the designated feature set satisfies a feature selection condition, which includes: a feature selection parameter when maximum likelihood estimation of classification of the performance features reaches a maximum value is the same as a feature selection parameter when the correlation reaches a minimum value.

The feature selection module 730 is configured to select the designated feature as the feature most relevant to the category label if the designated feature satisfies the feature selection condition.

In an alternative implementation, a value of the maximum likelihood estimation of the classification of the performance features is a sum of a likelihood ratio of true feature distribution to intrinsic feature distribution of the category label in the performance features, the correlation between the performance features and the category label, and information entropy of the performance features and the category label; and the likelihood ratio represents: a ratio of a probability density of the category label under the condition of the designated feature to a probability density of the category label under the condition of the designated feature and a feature prediction parameter.

In an alternative implementation, before selecting, according to the correlation between the performance features of the communication network and the preset category label, the specified number of the features most relevant to the category label from the performance features to obtain the designated feature set, the feature selection device is further configured to store the performance features as a feature matrix according to the performance features of performance data of the communication network, transpose the feature matrix to obtain the transposed feature matrix, and calculate correlation between each performance feature of the communication network and the preset category label according to the performance features in the transposed feature matrix.

In an alternative implementation, when the feature selection device is configured to calculate the correlation between each performance feature of the communication network and the preset category label, the feature selection device is configured to: broadcast the category label to a plurality of preset distributed computing nodes, instruct each distributed computing node to calculate mutual information between a candidate feature and the category label and obtain feature correlation between the candidate feature and the category label, with the candidate feature being the performance feature pre-allocated to each distributed computing node, and determine the correlation between each performance feature and the category label according to the feature correlation calculated by each distributed computing node.

In an alternative implementation, when the feature selection device is configured to calculate the mutual information between the candidate feature and the category label, the feature selection device is configured to: calculate histogram information of the category label and histogram information of the candidate feature, calculate marginal probability distribution of the category label, marginal probability distribution of the candidate feature, and joint probability distribution of the category label and the candidate feature according to the histogram information of the category label and the histogram information of the candidate feature, and calculate a probability distribution product of the marginal probability distribution of the category label and the marginal probability distribution of the candidate feature, and calculate a similarity degree of the joint probability distribution and the probability distribution product to obtain the mutual information between the candidate feature and the category label.

In an alternative implementation, if the designated feature does not satisfy the feature selection condition, the feature selection device further includes: a feature redundancy calculation module configured to calculate feature redundancy among the designated features in the designated feature set, the performance features, and the category label, update the designated feature set using the information about the feature redundancy obtained by the calculation, and take the updated designated feature set as the most relevant feature data selected from the performance features.

In an alternative implementation, when the feature redundancy calculation module is configured to calculate the feature redundancy among the designated features in the designated feature set, the performance features, and the category label, the feature redundancy calculation module is specifically configured to: broadcast the category label and the designated feature set to the plurality of preset distributed computing nodes, instruct each distributed computing node to calculate the feature redundancy among the candidate features, the designated features in the designated feature set, and the category label, with the candidate features being the performance features pre-allocated to each distributed computing node, and determine feature redundancy between each performance feature and the category label according to the feature redundancy calculated by each distributed computing node.

In an alternative implementation, when the feature redundancy calculation module is configured to calculate the feature redundancy among the candidate features, the designated features in the designated feature set, and the category label, the feature redundancy calculation module is specifically configured to: calculate histogram information of the candidate features, histogram information of the designated features in the designated feature set, and histogram information of the category label, and calculate conditional mutual information among the candidate features, the designated features, and the category label according to the histogram information of the candidate features, the histogram information of the designated features, and the histogram information of the category label, so as to obtain the feature redundancy among the candidate features, the designated features, and the category label.

In an alternative implementation, each matrix element in the feature matrix of the performance features represents the feature data corresponding to a specified feature index value and a partition index value. The feature index value is configured to index specified features of the communication network, the partition index value is configured to index data storage partitions corresponding to the category label, and the feature data of the same specified feature is stored in the same partition in the feature matrix.

With the feature selection device provided by the embodiment of the present disclosure, the feature selection process of the large-scale data can be optimized based on the distributed computing framework, so that the information theory-based feature selection algorithm can be applied in the current scenarios, and the performance of the machine learning algorithms and the performance of the feature selection algorithms can be improved.

It should be noted that the present disclosure is not limited to the specific configurations and processing described in the above implementations and illustrated in the drawings. For convenience and simplicity of description, detailed description of a known method is omitted herein, reference may be made to corresponding processes in the above feature selection method for specific operating processes of the systems, modules and units described above, and those specific operating processes will not be repeated here.

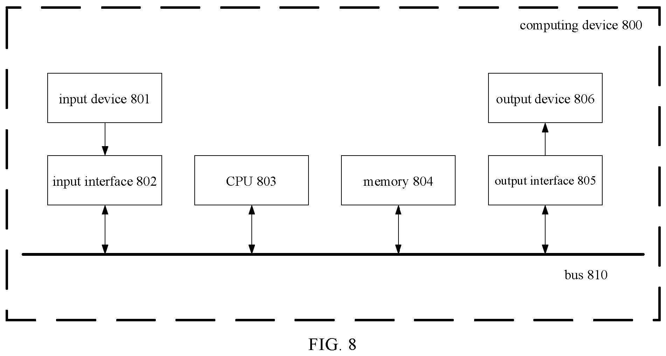

FIG. 8 illustrates an exemplary hardware architecture of a computing device capable of implementing the method and device provided by the embodiments of the present disclosure.

As shown in FIG. 8, a computing device 800 includes an input device 801, an input interface 802, a central processing unit (CPU) 803, a memory 804, an output interface 805, and an output device 806. The input interface 802, the CPU 803, the memory 804, and the output interface 805 are connected to each other via a bus 810, and the input device 801 and the output device 806 are connected to the bus 810 through the input interface 802 and the output interface 805 respectively, and are further connected to other components of the computing device 800.

In an alternative implementation, the input device 801 receives input information from the outside, and transmits the input information to the CPU 803 through the input interface 802; the CPU 803 processes the input information based on a computer-executable instruction stored in the memory 804 to generate output information, stores the output information temporarily or permanently in the memory 804, and then transmits the output information to the output device 806 through the output interface 805; and the output device 806 outputs the output information outside the computing device 800 for being used by a user.

In an alternative implementation, the computing device 800 shown in FIG. 8 may be implemented as a network device, which may include: a memory configured to store a program; and a processor configured to execute the program stored in the memory to perform at least one operation of the feature selection method provided by the embodiments of the present disclosure.

What is described above is merely the exemplary embodiments of the present disclosure, and is not intended to limit the scope of the present disclosure. In general, the various embodiments of the present disclosure may be implemented by hardware or special circuits, software, logic or any combination thereof. For example, some aspects of the present disclosure may be implemented by hardware and other aspects may be implemented by firmware or software executable by a controller, a microprocessor, or another computing device, but the present disclosure is not limited thereto.

The embodiments of the present disclosure may be implemented by a data processor of a mobile device executing computer program instructions. For example, the embodiments of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on a memory. The memory may be in any type suitable to local technical environment and may be implemented using any suitable data storage technology. For example, the memory is, but not limited to, a Read-Only Memory (ROM), a Random Access Memory (RAM), and an optical storage device and system (a Digital Versatile Disc (DVD) or a Compact Disc (CD)). A computer-readable medium may include a non-transitory storage medium. The data processor may be in any type suitable to the local technical environment. For example, the data processor is, but not limited to, a general-purpose computer, a special purpose computer, a microprocessor, a Digital Signal Processors (DSP), an Application Specific Integrated Circuit (ASIC), a Field Programmable Gate Array (FGPA), and a processor based on multi-core architecture.

## Claims

1. A feature selection method, comprising:
selecting (S110), according to correlation between performance features of a communication network and a preset category label, a specified number of features most relevant to the category label from the performance features to obtain a designated feature set; and
in response to a case where a designated feature in the designated feature set satisfies a feature selection condition, determining (S130) the designated feature as a feature most relevant to the category label;
**characterized in that**, the feature selection condition comprises: a feature selection parameter when maximum likelihood estimation of classification of the performance features reaches a maximum value is the same as a feature selection parameter when the correlation reaches a minimum value.

2. The method of claim 1, wherein
a value of the maximum likelihood estimation of the classification of the performance features is a sum of a likelihood ratio of true feature distribution to intrinsic feature distribution of the category label in the performance features, the correlation between the performance features and the category label, and information entropy of the performance features and the category label; and
the likelihood ratio represents a ratio of a probability density of the category label under the condition of the designated feature to a probability density of the category label under the condition of the designated feature and a feature prediction parameter.

3. The method of claim 1, before selecting, according to the correlation between the performance features of the communication network and the preset category label, the specified number of the features most relevant to the category label from the performance features to obtain the designated feature set, further comprising:
storing the performance features of performance data of the communication network as a feature matrix;
transposing the feature matrix to obtain the transposed feature matrix; and
calculating correlation between each performance feature of the communication network and the category label according to the performance features in the transposed feature matrix.

4. The method of claim 3, wherein calculating the correlation between each performance feature of the communication network and the category label comprises:
broadcasting the category label to a plurality of preset distributed computing nodes;
instructing each of the plurality of preset distributed computing nodes to calculate mutual information between a candidate feature and the category label to obtain feature correlation between the candidate feature and the category label; wherein the candidate feature is the performance feature of the communication network pre-allocated to each of the plurality of preset distributed computing nodes; and
determining the correlation between the performance feature of the communication network pre-allocated to each of the plurality of preset distributed computing nodes and the category label according to the feature correlation calculated by each of the plurality of preset distributed computing nodes.

5. The method of claim 4, wherein calculating the mutual information between the candidate feature and the category label comprises:
calculating histogram information of the category label and histogram information of the candidate feature;
calculating marginal probability distribution of the category label, marginal probability distribution of the candidate feature, and joint probability distribution of the category label and the candidate feature according to the histogram information of the category label and the histogram information of the candidate feature; and
calculating a probability distribution product of the marginal probability distribution of the category label and the marginal probability distribution of the candidate feature, and calculating a similarity degree of the joint probability distribution and the probability distribution product to obtain the mutual information between the candidate feature and the category label.

6. The method of any one of claims 1 to 3, in response to a case that the designated feature does not satisfy the feature selection condition, comprising:
calculating feature redundancy among the designated feature, the performance features of the communication network, and the category label;
updating the designated feature set using information about the feature redundancy obtained by calculation; and
taking the updated designated feature set as most relevant feature data selected from the performance features of the communication network.

7. The method of claim 6, wherein calculating the feature redundancy among the designated feature, the performance features of the communication network, and the category label comprises:
broadcasting the category label and the designated feature set to a plurality of preset distributed computing nodes;
instructing each of the plurality of preset distributed computing nodes to calculate feature redundancy among a candidate feature, the designated feature, and the category label; wherein the candidate feature is the performance feature of the communication network pre-allocated to each of the plurality of preset distributed computing nodes; and
determining feature redundancy between the performance feature of the communication network pre-allocated to each of the plurality of preset distributed computing nodes and the category label according to the feature redundancy calculated by each of the plurality of preset distributed computing nodes.

8. The method of claim 7, wherein calculating the feature redundancy among the candidate feature, the designated feature, and the category label comprises:
calculating histogram information of the candidate feature, histogram information of the designated feature in the designated feature set, and histogram information of the category label; and
calculating conditional mutual information among the candidate feature, the designated feature, and the category label according to the histogram information of the candidate feature, the histogram information of the designated feature, and the histogram information of the category label to obtain the feature redundancy among the candidate feature, the designated feature, and the category label.

9. The method of claim 3, wherein
each matrix element in the feature matrix represents feature data corresponding to a specified feature index value and a partition index value; wherein the feature index value is configured to index specified features of the communication network, the partition index value is configured to index data storage partitions corresponding to the category label, and the feature data of a same specified feature is stored in a same partition in the feature matrix.

10. A feature selection device, comprising:
a feature designation module (710) configured to select, according to correlation between performance features of a communication network and a preset category label, a specified number of features most relevant to the category label from the performance features of the communication network to obtain a designated feature set;
a feature determination module (720) configured to determine whether a designated feature in the designated feature set satisfies a feature selection condition; wherein, the feature selection condition comprises: a feature selection parameter when maximum likelihood estimation of classification of the performance features reaches a maximum value is the same as a feature selection parameter when the correlation reaches a minimum value; and
a feature selection module (730) configured to determine the designated feature as a feature most relevant to the category label in response to a case where the feature determination module determines that the designated feature satisfies the feature selection condition.

11. A network device, comprising:
one or more processors; and
a memory having stored thereon one or more programs which, when executed by the one or more processors, cause the one or more processors to carry out the feature selection method of any one of claims 1 to 9.

12. A computer-readable storage medium having a computer program stored thereon, wherein, when the computer program is executed by a processor, the feature selection method of any one of claims 1 to 9 is carried out.

## Patentansprüche

1. Merkmalsauswahlverfahren, umfassend:
Auswählen (S110), gemäß einer Korrelation zwischen Leistungsmerkmalen eines Kommunikationsnetzwerks und einem voreingestellten Kategorieetikett, einer spezifizierten Anzahl von Merkmalen, die für das Kategorieetikett am relevantesten sind, aus den Leistungsmerkmalen, um einen bestimmten Merkmalssatz zu erhalten; und
als Reaktion auf einen Fall, in dem ein bestimmtes Merkmal in dem bestimmten Merkmalssatz eine Merkmalsauswahlbedingung erfüllt, Bestimmen (S130) des bestimmten Merkmals als ein Merkmal, das für das Kategorieetikett am relevantesten ist;
**dadurch gekennzeichnet, dass** die Merkmalsauswahlbedingung umfasst: ein Merkmalsauswahlparameter, wenn die Abschätzung der maximalen Wahrscheinlichkeit der Klassifizierung der Leistungsmerkmale einen Maximalwert erreicht, ist derselbe wie ein Merkmalsauswahlparameter, wenn die Korrelation einen Minimalwert erreicht.

2. Verfahren nach Anspruch 1, wobei
ein Wert der Abschätzung der maximalen Wahrscheinlichkeit der Klassifizierung der Leistungsmerkmale eine Summe eines Wahrscheinlichkeitsverhältnisses der wahren Merkmalsverteilung zur intrinsischen Merkmalsverteilung des Kategorieetiketts in den Leistungsmerkmalen, der Korrelation zwischen den Leistungsmerkmalen und dem Kategorieetikett und der Informationsentropie der Leistungsmerkmale und des Kategorieetiketts ist; und
das Wahrscheinlichkeitsverhältnis ein Verhältnis einer Wahrscheinlichkeitsdichte des Kategorieetiketts unter der Bedingung des bestimmten Merkmals zu einer Wahrscheinlichkeitsdichte des Kategorieetiketts unter der Bedingung des bestimmten Merkmals und eines Merkmalsvorhersageparameters repräsentiert.

3. Verfahren nach Anspruch 1, vor dem Auswählen, gemäß der Korrelation zwischen den Leistungsmerkmalen des Kommunikationsnetzwerks und dem voreingestellten Kategorieetikett, der spezifizierten Anzahl der Merkmale, die für das Kategorieetikett am relevantesten sind, aus den Leistungsmerkmalen, um den bestimmten Merkmalssatz zu erhalten, ferner umfassend:
Speichern der Leistungsmerkmale von Leistungsdaten des Kommunikationsnetzwerks als eine Merkmalsmatrix;
Transponieren der Merkmalsmatrix, um die transponierte Merkmalsmatrix zu erhalten; und
Berechnen der Korrelation zwischen jedem Leistungsmerkmal des Kommunikationsnetzwerks und dem Kategorieetikett gemäß den Leistungsmerkmalen in der transponierten Merkmalsmatrix.

4. Verfahren nach Anspruch 3, wobei das Berechnen der Korrelation zwischen jedem Leistungsmerkmal des Kommunikationsnetzwerks und dem Kategorieetikett umfasst:
Übertragen des Kategorieetiketts an eine Vielzahl von voreingestellten verteilten Rechenknoten;
Anweisen jedes der Vielzahl von voreingestellten verteilten Rechenknoten, gegenseitige Informationen zwischen einem Kandidatenmerkmal und dem Kategorieetikett zu berechnen, um eine Merkmalskorrelation zwischen dem Kandidatenmerkmal und dem Kategorieetikett zu erhalten; wobei das Kandidatenmerkmal das Leistungsmerkmal des Kommunikationsnetzwerks ist, das jedem der Vielzahl von voreingestellten verteilten Rechenknoten vorab zugewiesen wurde; und
Bestimmen der Korrelation zwischen dem Leistungsmerkmal des Kommunikationsnetzwerks, das jedem der Vielzahl von voreingestellten verteilten Rechenknoten vorab zugewiesen wurde, und dem Kategorieetikett gemäß der Merkmalskorrelation, die von jedem der Vielzahl von voreingestellten verteilten Rechenknoten berechnet wurde.

5. Verfahren nach Anspruch 4, wobei das Berechnen der gegenseitigen Informationen zwischen dem Kandidatenmerkmal und dem Kategorieetikett umfasst:
Berechnen von Histogramminformationen des Kategorieetiketts und Histogramminformationen des Kandidatenmerkmals;
Berechnen der marginalen Wahrscheinlichkeitsverteilung des Kategorieetiketts, der marginalen Wahrscheinlichkeitsverteilung des Kandidatenmerkmals und der gemeinsamen Wahrscheinlichkeitsverteilung des Kategorieetiketts und des Kandidatenmerkmals gemäß den Histogramminformationen des Kategorieetiketts und den Histogramminformationen des Kandidatenmerkmals; und
Berechnen eines Wahrscheinlichkeitsverteilungsprodukts der marginalen Wahrscheinlichkeitsverteilung des Kategorieetiketts und der marginalen Wahrscheinlichkeitsverteilung des Kandidatenmerkmals und Berechnen eines Ähnlichkeitsgrads der gemeinsamen Wahrscheinlichkeitsverteilung und des Wahrscheinlichkeitsverteilungsprodukts, um die gegenseitigen Informationen zwischen dem Kandidatenmerkmal und dem Kategorieetikett zu erhalten.

6. Verfahren nach einem der Ansprüche 1 bis 3, als Reaktion auf einen Fall, in dem das bestimmte Merkmal die Merkmalsauswahlbedingung nicht erfüllt, umfassend:
Berechnen einer Merkmalsredundanz unter dem bestimmten Merkmal, den Leistungsmerkmalen des Kommunikationsnetzwerks und dem Kategorieetikett;
Aktualisieren des bestimmten Merkmalssatzes unter Verwendung von Informationen über die Merkmalsredundanz, die durch Berechnung erhalten werden; und
Nehmen des aktualisierten bestimmten Merkmalssatzes als die relevantesten Merkmalsdaten, die aus den Leistungsmerkmalen des Kommunikationsnetzwerks ausgewählt werden.

7. Verfahren nach Anspruch 6, wobei das Berechnen der Merkmalsredundanz unter dem bestimmten Merkmal, den Leistungsmerkmalen des Kommunikationsnetzwerks und dem Kategorieetikett umfasst:
Übertragen des Kategorieetiketts und des bestimmten Merkmalssatzes an eine Vielzahl von voreingestellten verteilten Rechenknoten;
Anweisen jedes der Vielzahl von voreingestellten verteilten Rechenknoten, eine Merkmalsredundanz unter einem Kandidatenmerkmal, dem bestimmten Merkmal und dem Kategorieetikett zu berechnen; wobei das Kandidatenmerkmal das Leistungsmerkmal des Kommunikationsnetzwerks ist, das jedem der Vielzahl von voreingestellten verteilten Rechenknoten vorab zugewiesen wurde; und
Bestimmen einer Merkmalsredundanz zwischen dem Leistungsmerkmal des Kommunikationsnetzwerks, das jedem der Vielzahl von voreingestellten verteilten Rechenknoten vorab zugewiesen wurde, und dem Kategorieetikett gemäß der Merkmalsredundanz, die von jedem der Vielzahl von voreingestellten verteilten Rechenknoten berechnet wurde.

8. Verfahren nach Anspruch 7, wobei das Berechnen der Merkmalsredundanz unter dem Kandidatenmerkmal, dem bestimmten Merkmal und dem Kategorieetikett umfasst:
Berechnen von Histogramminformationen des Kandidatenmerkmals, Histogramminformationen des bestimmten Merkmals in dem bestimmten Merkmalssatz und Histogramminformationen des Kategorieetiketts; und
Berechnen bedingter gegenseitiger Informationen unter dem Kandidatenmerkmal, dem bestimmten Merkmal und dem Kategorieetikett gemäß den Histogramminformationen des Kandidatenmerkmals, den Histogramminformationen des bestimmten Merkmals und den Histogramminformationen des Kategorieetiketts, um die Merkmalsredundanz unter dem Kandidatenmerkmal, dem bestimmten Merkmal und dem Kategorieetikett zu erhalten.

9. Verfahren nach Anspruch 3, wobei
jedes Matrixelement in der Merkmalsmatrix Merkmalsdaten repräsentiert, die einem spezifizierten Merkmalsindexwert und einem Partitionsindexwert zugeordnet sind; wobei der Merkmalsindexwert konfiguriert ist, um spezifizierte Merkmale des Kommunikationsnetzwerks zu indizieren, der Partitionsindexwert konfiguriert ist, um Datenspeicherpartitionen zu indizieren, die dem Kategorieetikett zugeordnet sind, und die Merkmalsdaten eines gleichen spezifizierten Merkmals in einer gleichen Partition in der Merkmalsmatrix gespeichert werden.

10. Merkmalsauswahlvorrichtung, umfassend:
ein Merkmalsbestimmungsmodul (710), das konfiguriert ist, um gemäß einer Korrelation zwischen Leistungsmerkmalen eines Kommunikationsnetzwerks und einem voreingestellten Kategorieetikett eine spezifizierte Anzahl von Merkmalen, die für das Kategorieetikett am relevantesten sind, aus den Leistungsmerkmalen des Kommunikationsnetzwerks auszuwählen, um einen bestimmten Merkmalssatz zu erhalten;
ein Merkmalsbestimmungsmodul (720), das konfiguriert ist, um zu bestimmen, ob ein bestimmtes Merkmal in dem bestimmten Merkmalssatz eine Merkmalsauswahlbedingung erfüllt; wobei die Merkmalsauswahlbedingung umfasst: ein Merkmalsauswahlparameter, wenn die Abschätzung der maximalen Wahrscheinlichkeit der Klassifizierung der Leistungsmerkmale einen Maximalwert erreicht, ist derselbe wie ein Merkmalsauswahlparameter, wenn die Korrelation einen Minimalwert erreicht; und
ein Merkmalsauswahlmodul (730), das konfiguriert ist, um das bestimmte Merkmal als ein Merkmal zu bestimmen, das für das Kategorieetikett am relevantesten ist, als Reaktion auf einen Fall, in dem das Merkmalsbestimmungsmodul bestimmt, dass das bestimmte Merkmal die Merkmalsauswahlbedingung erfüllt.

11. Netzwerkvorrichtung, umfassend:
einen oder mehrere Prozessoren; und
einen Speicher, auf dem ein oder mehrere Programme gespeichert sind, die, wenn sie von dem einen oder den mehreren Prozessoren ausgeführt werden, den einen oder die mehreren Prozessoren veranlassen, das Merkmalsauswahlverfahren nach einem der Ansprüche 1 bis 9 auszuführen.

12. Computerlesbares Speichermedium, auf dem ein Computerprogramm gespeichert ist, wobei, wenn das Computerprogramm von einem Prozessor ausgeführt wird, das Merkmalsauswahlverfahren nach einem der Ansprüche 1 bis 9 ausgeführt wird.

## Revendications

1. Procédé de sélection de caractéristiques, comprenant les étapes consistant à :
sélectionner (S110), selon une corrélation entre des caractéristiques de performance d'un réseau de communication et une étiquette de catégorie prédéfinie, un nombre spécifié de caractéristiques les plus pertinentes pour l'étiquette de catégorie parmi les caractéristiques de performance pour obtenir un ensemble de caractéristiques désignées ; et
en réponse à un cas où une caractéristique désignée dans l'ensemble de caractéristiques désignées satisfait à une condition de sélection de caractéristiques, déterminer (S130) la caractéristique désignée en tant que caractéristique la plus pertinente pour l'étiquette de catégorie ;
**caractérisé en ce que** la condition de sélection de caractéristiques comprend : un paramètre de sélection de caractéristiques lorsqu'une estimation de probabilité maximale de classification des caractéristiques de performance atteint une valeur maximale est le même qu'un paramètre de sélection de caractéristiques lorsque la corrélation atteint une valeur minimale.

2. Procédé selon la revendication 1, dans lequel
une valeur de l'estimation de probabilité maximale de la classification des caractéristiques de performance est une somme d'un ratio de probabilité d'une distribution de caractéristiques réelle sur une distribution de caractéristiques intrinsèque de l'étiquette de catégorie dans les caractéristiques de performance, de la corrélation entre les caractéristiques de performance et l'étiquette de catégorie, et d'une entropie d'informations des caractéristiques de performance et de l'étiquette de catégorie ; et
le ratio de probabilité représente un ratio d'une densité de probabilité de l'étiquette de catégorie sous la condition de la caractéristique désignée sur une densité de probabilité de l'étiquette de catégorie sous la condition de la caractéristique désignée et d'un paramètre de prédiction de caractéristiques.

3. Procédé selon la revendication 1, avant de sélectionner, selon la corrélation entre les caractéristiques de performance du réseau de communication et l'étiquette de catégorie prédéfinie, le nombre spécifié des caractéristiques les plus pertinentes pour l'étiquette de catégorie parmi les caractéristiques de performance pour obtenir l'ensemble de caractéristiques désignées, comprenant en outre les étapes consistant à :
stocker les caractéristiques de performance de données de performance du réseau de communication en tant que matrice de caractéristiques ;
transposer la matrice de caractéristiques pour obtenir la matrice de caractéristiques transposée ; et
calculer une corrélation entre chaque caractéristique de performance du réseau de communication et l'étiquette de catégorie selon les caractéristiques de performance dans la matrice de caractéristiques transposée.

4. Procédé selon la revendication 3, dans lequel le calcul de la corrélation entre chaque caractéristique de performance du réseau de communication et l'étiquette de catégorie comprend les étapes consistant à :
diffuser l'étiquette de catégorie à une pluralité de nœuds de calcul distribués prédéfinis ;
ordonner à chacun de la pluralité de nœuds de calcul distribués prédéfinis de calculer des informations mutuelles entre une caractéristique candidate et l'étiquette de catégorie pour obtenir une corrélation de caractéristiques entre la caractéristique candidate et l'étiquette de catégorie ; dans lequel la caractéristique candidate est la caractéristique de performance du réseau de communication pré-attribuée à chacun de la pluralité de nœuds de calcul distribués prédéfinis ; et
déterminer la corrélation entre la caractéristique de performance du réseau de communication pré-attribuée à chacun de la pluralité de nœuds de calcul distribués prédéfinis et l'étiquette de catégorie selon la corrélation de caractéristiques calculée par chacun de la pluralité de nœuds de calcul distribués prédéfinis.

5. Procédé selon la revendication 4, dans lequel le calcul des informations mutuelles entre la caractéristique candidate et l'étiquette de catégorie comprend les étapes consistant à :
calculer des informations d'histogramme de l'étiquette de catégorie et des informations d'histogramme de la caractéristique candidate ;
calculer une distribution de probabilité marginale de l'étiquette de catégorie, une distribution de probabilité marginale de la caractéristique candidate, et une distribution de probabilité jointe de l'étiquette de catégorie et de la caractéristique candidate selon les informations d'histogramme de l'étiquette de catégorie et les informations d'histogramme de la caractéristique candidate ; et
calculer un produit de distribution de probabilité de la distribution de probabilité marginale de l'étiquette de catégorie et de la distribution de probabilité marginale de la caractéristique candidate, et calculer un degré de similarité de la distribution de probabilité jointe et du produit de distribution de probabilité pour obtenir les informations mutuelles entre la caractéristique candidate et l'étiquette de catégorie.

6. Procédé selon l'une quelconque des revendications 1 à 3, en réponse à un cas où la caractéristique désignée ne satisfait pas à la condition de sélection de caractéristiques, comprenant les étapes consistant à :
calculer une redondance de caractéristiques parmi la caractéristique désignée, les caractéristiques de performance du réseau de communication, et l'étiquette de catégorie ;
mettre à jour l'ensemble de caractéristiques désignées en utilisant des informations concernant la redondance de caractéristiques obtenues par calcul ; et
prendre l'ensemble de caractéristiques désignées mis à jour en tant que données de caractéristiques les plus pertinentes sélectionnées parmi les caractéristiques de performance du réseau de communication.

7. Procédé selon la revendication 6, dans lequel le calcul de la redondance de caractéristiques parmi la caractéristique désignée, les caractéristiques de performance du réseau de communication, et l'étiquette de catégorie comprend les étapes consistant à :
diffuser l'étiquette de catégorie et l'ensemble de caractéristiques désignées à une pluralité de nœuds de calcul distribués prédéfinis ;
ordonner à chacun de la pluralité de nœuds de calcul distribués prédéfinis de calculer une redondance de caractéristiques parmi une caractéristique candidate, la caractéristique désignée, et l'étiquette de catégorie ; dans lequel la caractéristique candidate est la caractéristique de performance du réseau de communication pré-attribuée à chacun de la pluralité de nœuds de calcul distribués prédéfinis ; et
déterminer une redondance de caractéristiques entre la caractéristique de performance du réseau de communication pré-attribuée à chacun de la pluralité de nœuds de calcul distribués prédéfinis et l'étiquette de catégorie selon la redondance de caractéristiques calculée par chacun de la pluralité de nœuds de calcul distribués prédéfinis.

8. Procédé selon la revendication 7, dans lequel le calcul de la redondance de caractéristiques parmi la caractéristique candidate, la caractéristique désignée, et l'étiquette de catégorie comprend les étapes consistant à :
calculer des informations d'histogramme de la caractéristique candidate, des informations d'histogramme de la caractéristique désignée dans l'ensemble de caractéristiques désignées, et des informations d'histogramme de l'étiquette de catégorie ; et
calculer des informations mutuelles conditionnelles parmi la caractéristique candidate, la caractéristique désignée, et l'étiquette de catégorie selon les informations d'histogramme de la caractéristique candidate, les informations d'histogramme de la caractéristique désignée, et les informations d'histogramme de l'étiquette de catégorie pour obtenir la redondance de caractéristiques parmi la caractéristique candidate, la caractéristique désignée, et l'étiquette de catégorie.

9. Procédé selon la revendication 3, dans lequel
chaque élément de matrice dans la matrice de caractéristiques représente des données de caractéristiques correspondant à une valeur d'indice de caractéristiques spécifiée et une valeur d'indice de partition ; dans lequel la valeur d'indice de caractéristiques est configurée pour indexer des caractéristiques spécifiées du réseau de communication, la valeur d'indice de partition est configurée pour indexer des partitions de mémoire de données correspondant à l'étiquette de catégorie, et les données de caractéristiques d'une même caractéristique spécifiée sont stockées dans une même partition dans la matrice de caractéristiques.

10. Dispositif de sélection de caractéristiques, comprenant :
un module de désignation de caractéristiques (710) configuré pour sélectionner, selon une corrélation entre des caractéristiques de performance d'un réseau de communication et une étiquette de catégorie prédéfinie, un nombre spécifié de caractéristiques les plus pertinentes pour l'étiquette de catégorie parmi les caractéristiques de performance du réseau de communication pour obtenir un ensemble de caractéristiques désignées ;
un module de détermination de caractéristiques (720) configuré pour déterminer si une caractéristique désignée dans l'ensemble de caractéristiques désignées satisfait à une condition de sélection de caractéristiques ; dans lequel la condition de sélection de caractéristiques comprend : un paramètre de sélection de caractéristiques lorsqu'une estimation de probabilité maximale de classification des caractéristiques de performance atteint une valeur maximale est le même qu'un paramètre de sélection de caractéristiques lorsque la corrélation atteint une valeur minimale ; et
un module de sélection de caractéristiques (730) configuré pour déterminer la caractéristique désignée en tant que caractéristique la plus pertinente pour l'étiquette de catégorie en réponse à un cas où le module de détermination de caractéristiques détermine que la caractéristique désignée satisfait à la condition de sélection de caractéristiques.

11. Dispositif de réseau, comprenant :
un ou plusieurs processeurs ; et
une mémoire sur laquelle sont stockés un ou plusieurs programmes qui, lorsqu'ils sont exécutés par les un ou plusieurs processeurs, amènent les un ou plusieurs processeurs à réaliser le procédé de sélection de caractéristiques selon l'une quelconque des revendications 1 à 9.

12. Moyen de stockage lisible par ordinateur sur lequel est stocké un programme informatique, dans lequel, lorsque le programme informatique est exécuté par un processeur, le procédé de sélection de caractéristiques selon l'une quelconque des revendications 1 à 9 est réalisé.
